# EUROPEAN PATENT SPECIFICATION

(11) **EP 1 518 905 B1**
(45) Date of publication and mention of the grant of the patent: **22.08.2012**
(21) Application number: 04255598.7
(22) Date of filing: 15.09.2004
(51) Int. Cl.: C09D 5/16, C09D 183/04

(54) **Antifouling condensation curing organopolysiloxane composition and underwater structure**
Durch Kondensation härtbare Antifäulnis-Zusammensetzung und Unterwasserstrukturen
Compositions antisalissures d'organopolysiloxanes durcissables par condensation et structures sous-marines.

(30) Priority: 16.09.2003 JP 2003322856
(43) Date of publication of application: 30.03.2005
(73) Proprietor: Shin-Etsu Chemical Co., Ltd., Chiyoda-ku, Tokyo (JP)
(72) Inventor: Sakamoto, Takafumi, Shin-Etsu Chemical Co. Ltd., Usui-gun Gunma-ken (JP); Kimura, Tsuneo, Shin-Etsu Chemical Co., Ltd., Usui-gun Gunma-ken (JP)
(74) Representative: Stoner, Gerard Patrick

(56) References cited:
- EP-A- 1 092 758
- EP-A- 1 275 705
- WO-A-00/14166
- WO-A-92/00357
- WO-A-93/06180
- US-A- 4 025 693
- US-A- 5 958 116

## Description

This invention relates to a room temperature-vulcanizable organopolysiloxane composition suitable as a coating material and more particularly, to an RTV organopolysiloxane composition which is applied to underwater structures (e.g., ships, harbor facilities, buoys, pipe lines, bridges, submarine stations, submarine oil well excavation units, power plant water conduits, fish culture nets and fixed shore nets) to form anti-fouling coatings suitable for preventing aquatic organisms from depositing and growing on their surface. It also relates to an underwater structure coated with the composition.

### BACKGROUND

Known in the art are a variety of room temperature-vulcanizable (RTV) silicone rubber compositions which cure into rubbery elastomers at room temperature. Rubbers resulting from such RTV compositions have improved weather resistance, durability, heat resistance and freeze resistance as compared with other organic rubbers and are thus used in a wide variety of fields. Especially in the building field, RTV compositions are often used for the bonding of glass plates, the bonding of metal and glass, the sealing of concrete joints and the like. Recently, RTV compositions newly find wide use as coating material for buildings, plants, water conduits (inclusive of inner and outer surfaces) and the like.

The organopolysiloxane on which RTV is based, however, has a tendency towards electrostatic charging and is thus likely to adsorb dust in air. This is problematic in that surfaces of cured sealing or coating materials are markedly fouled with the lapse of time, losing aesthetic appearance. One typical solution to this problem is by adding or incorporating surfactants having a polyoxyethylene group, sorbitan residue or disaccharide residue to RTV (see JP-A 56-76452 and JP-A 56-76453). To achieve fully satisfactory results by the above method, the surfactants must be added in large amounts, undesirably degrading the adhesion which is one important function of RTV sealing or coating materials.

Once underwater structures are installed or in service, aquatic organisms living in waters like sea and rivers such as barnacle, lamp chimney, serpula, mussel, Bryozoa, and seaweeds (e.g., Enteromorpha and Ulva) deposit and grow on splashed and submerged surface areas, causing various damages. In the case of a ship, for example, the deposition of organisms to the hull increases frictional resistance to water to reduce the speed. The fuel consumption must be increased to maintain a certain speed, which is uneconomical. If organisms deposit on structures of a harbor facility which are fixed at or below the water surface, it becomes difficult for the structures to exert their own function and sometimes, their substrates can be eroded. If organisms deposit on fish culture nets or fixed shore nets, net openings are clogged, eventually leading to the death of fishes.

Conventional means for preventing deposition and growth of aquatic organisms on underwater structures is the application to such structures of anti-fouling paints having incorporated therein toxic anti-fouling agents such as organotin compounds and cuprous oxide. Although such anti-fouling paints are effective for substantially preventing deposition and growth of aquatic organisms, the use of toxic anti-fouling agents is harmful to the environmental safety and hygiene during preparation and application of paints. Additionally, the toxic anti-fouling agent is slowly leached out of the coating in water, with the risk of contaminating the surrounding water area over a long term. For this reason, the use of toxic anti-fouling agents was legally banned.

There have been proposed paint compositions which are effective for preventing deposition and growth of aquatic organisms, but free of toxic anti-fouling agents. Paint compositions which are designed to impart anti-fouling property by reducing the surface tension of coatings include non-toxic anti-fouling paint compositions comprising RTV and liquid paraffin or petrolatum (see JP-A 58-13673 and JP-A 62-84166). Japanese Patent Nos. 2,503,986 and 2,952,375 disclose non-toxic anti-fouling paint compositions comprising a reaction curing silicone resin and a less compatible, non-reactive, polar group-containing silicone resin wherein under the impetus of volume shrinkage associated with curing of the reaction curing silicone resin, the polar group-containing silicone resin bleeds out of the surface, which cooperates with the low surface tension of reaction curing silicone resin, to exhibit anti-fouling property. These non-toxic anti-fouling paint compositions, however, suffer from environmental safety and hygiene problems because the less compatible, non-reactive, polar group-containing silicone resin serving as bleed oil is a polyoxyethylene group-containing silicone resin in which ethylene oxide or propylene oxide is added to a silicon atom via a C-C bond or a silicone resin having an alkoxy group bonded to a silicon atom at a molecular end via an ethylene oxide or propylene oxide group.

An object of the present invention is to provide an anti-fouling RTV organopolysiloxane composition to be applied to an underwater structure to form an anti-fouling coating which is effective for preventing deposition and growth of aquatic organisms on a surface thereof, and maintains the effect over time and addresses the environmental safety and hygiene problems. Another aspect is to provide an underwater structure coated with the composition.

Making a study on the anti-fouling effect of oil bleed used in the prior art, the inventors have discovered that a satisfactory anti-fouling effect is attained by using a non-reactive diorganopolysiloxane, especially dialkyl namely dimethylpolysiloxane and/or diethylpolysiloxane, as a bleed oil of high safety, and modifying the structure of a diorganopolysiloxane base polymer such that at least two silicon atom-bonded hydroxyl or hydrolyzable groups are present in a molecule and at least 2 mol% of entire substituent groups bonded to silicon atoms are phenyl groups.

The present invention addresses an anti-fouling composition, with a primary focus on environmental safety and hygiene. Rather than oxyalkylene-modified silicones and methylphenylsilicone and dimethyldiphenylsilicone which are used as the bleed oil component in the prior art and for which only limited environmental safety data are available, the present inventors paid attention to diorganopolysiloxanes with only non-reactive monovalent hydrocarbon groups bonded to silicon atoms and similar silicone oils for which full environmental safety data are available.

In prior art anti-fouling silicone rubber compositions, substituent groups on the base polymer are substituted or unsubstituted monovalent hydrocarbon groups, most often methyl groups, while few examples use phenyl groups.

With respect to the use of phenyl groups as the substituent group, a typical uncurable composition is a transparent silicone compound (Japanese Patent No. 2,782,068) and a typical (flame retardant) curable composition is an RTV polyorganosiloxane composition (Japanese Patent No. 2,502,714). The purpose of using phenyl groups is to improve transparency in the former, and to improve flame retardance in the latter.

WO93/06180 describes aquatic anti-fouling coatings in which particular elastomeric undercoats are provided beneath a top coat of RTV silicone rubber. The latter is generically defined, but may contain phenyl radicals at between 0.1 and 10%. A ketiminoxysilane may be used for cross-linking. A non-reactive silicone oil is a preferred component, preferably a methylphenylsilicone oil in which at least 25% units are methylphenysiloxane units.

JP-A 2000-248067 relates to an organic resin modifier, a silicone-modified organic resin and a coating composition in which a silicone-modified organic resin obtained through copolymerization reaction of a hydroxyphenyl group-containing silicone with an organic resin monomer is used as a coating composition. Japanese Patent No. 2,645,382 describes an anti-fouling paint composition comprising a non-grafted two phase stable mixture of a polysiloxane and a vinyl resin, which is obtained by polymerizing a vinyl monomer having at least one polymerizable unsaturated group in the presence of a diorganopolysiloxane having dialkoxy groups at both ends and containing phenyl groups. These patent publications, however, do not refer to the use of a diorganopolysiloxane having a specific amount of silicon atom-bonded phenyl groups incorporated therein as the base polymer.

As a consequence, it has been found that an RTV organopolysiloxane composition is obtainable by specifying the substituent group and structure of a base polymer as mentioned above and using a specific bleed oil as mentioned above, and that when the RTV organopolysiloxane composition is applied to an underwater structure, the resulting coating is effective for preventing deposition and growth of aquatic organisms on a surface thereof, maintains the anti-fouling effect over a long time, and has good environmental safety and hygiene.

Accordingly, the present invention provides an anti-fouling condensation curing organopolysiloxane composition comprising in admixture,
(A) a base polymer in the form of a diorganopolysiloxane having at least two silicon atom-bonded hydroxyl or hydrolyzable groups in a molecule, in which at least 2 mol% of entire substituent groups bonded to silicon atoms are phenyl groups,
(B) a silane having at least two hydrolyzable groups in a molecule and/or a partial hydrolytic condensate thereof, and
(C) a diorganopolysiloxane having non-reactive, monovalent, substituted or unsubstituted hydrocarbon group bonded to silicon atom, wherein the hydrocarbon groups are selected from methyl and ethyl.

An underwater structure coated with the composition is also provided, and use for coating such structures.

The anti-fouling RTV organopolysiloxane composition of the invention forms an anti-fouling coating which is non-toxic and non-detrimental to the environment, and exhibits the anti-fouling effect of preventing deposition and growth of aquatic organisms over a long term.

### FURTHER EXPLANATIONS; OPTIONS AND PREFERENCES

The anti-fouling condensation curing organopolysiloxane composition of the invention is defined as comprising in admixture, components (A) to (C):
(A) a base polymer in the form of a diorganopolysiloxane having at least two silicon atom-bonded hydroxyl or hydrolyzable groups in a molecule, in which at least 2 mol% of entire substituent groups bonded to silicon atoms are phenyl groups,
(B) a silane having at least two hydrolyzable groups in a molecule and/or a partial hydrolytic condensate thereof, and
(C) a diorganopolysiloxane having a non-reactive, monovalent, substituted or unsubstituted hydrocarbon group bonded to a silicon atom.

### [Component (A)]

The diorganopolysiloxane serving as component (A) is a base polymer of the inventive anti-fouling condensation curing organopolysiloxane composition. The diorganopolysiloxane has at least two silicon atom-bonded hydroxyl or hydrolyzable groups in a molecule, and at least 2 mol% of entire substituent groups bonded to silicon atoms are phenyl groups. Suitable diorganopolysiloxanes include diorganopolysiloxanes capped with hydroxyl or hydrolyzable groups at both ends of their molecular chain, represented by the following general formula (1) or (2). 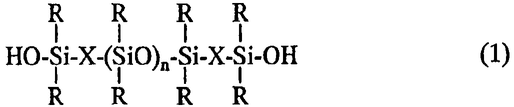 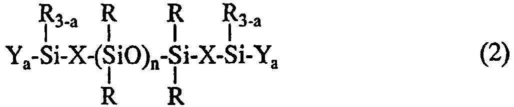 Herein R is a substituted or unsubstituted monovalent hydrocarbon group, at least 2 mol% of R being phenyl groups, X is an oxygen atom or a divalent hydrocarbon group of 1 to 8 carbon atoms, Y is a hydrolyzable group, n is such a number that the diorganopolysiloxane has a viscosity of 100 to 1,000,000 mm²/s at 25°C, and "a" is equal to 2 or 3.

Suitable substituted or unsubstituted monovalent hydrocarbon groups represented by R include alkyl groups such as methyl, ethyl, propyl, butyl, pentyl, hexyl, heptyl, octyl, nonyl, decyl and octadecyl; cycloalkyl groups such as cyclopentyl and cyclohexyl; alkenyl groups such as vinyl, allyl, butenyl, pentenyl and hexenyl; aryl groups such as phenyl, tolyl, xylyl and a- and β-naphthyl; aralkyl groups such as benzyl, 2-phenylethyl and 3-phenylpropyl; and substituted forms of the foregoing groups in which some or all hydrogen atoms are substituted with halogen atoms (e.g., F, Cl and Br) or cyano groups, such as 3-chloropropyl, 3,3,3-trifluoropropyl and 2-cyanoethyl. Of these, preferred substituent groups other than phenyl are methyl and ethyl, with methyl being most preferred. Importantly, phenyl groups account for at least 2 mol%, preferably at least 5 mol% and more preferably at least 8 mol% of all R groups. Phenyl is preferably not more than 50 mol%, more preferably not more than 40 mol%.

X is an oxygen atom or a divalent hydrocarbon group of 1 to 8 carbon atoms, represented by -(CH₂)ₘ- wherein m is an integer of 1 to 8. Of these, an oxygen atom and -CH₂CH₂- are preferred.

Y is a hydrolyzable group, other than hydroxyl group, situated at ends of the molecular chain of diorganopolysiloxane. Examples include alkoxy groups such as methoxy, ethoxy and propoxy; alkoxyalkoxy groups such as methoxyethoxy, ethoxyethoxy and methoxypropoxy; acyloxy groups such as acetoxy, octanoyloxy and benzoyloxy; alkenyloxy groups such as vinyloxy, isopropenyloxy and 1-ethyl-2-methylvinyloxy; ketoxime groups such as dimethylketoxime, methylethylketoxime and diethylketoxime; amino groups such as dimethylamino, diethylamino, butylamino and cyclohexylamino; aminoxy groups such as dimethylaminoxy and diethylaminoxy; and amide groups such as N-methylacetamide, N-ethylacetamide and N-methylbenzamide. Of these, alkoxy groups are preferred.

The diorganopolysiloxane (A) should preferably have a viscosity at 25°C of 100 to 1,000,000 mm²/s, more preferably 300 to 500,000 mm²/s, even more preferably 500 to 100,000 mm²/s, and most preferably 1,000 to 50,000 mm²/s. If the diorganopolysiloxane has a viscosity of less than 100 mm²/s at 25°C, it may become difficult to form a coating having good physical and mechanical strength. If the diorganopolysiloxane has a viscosity of more than 1,000,000 mm²/s at 25°C, the composition may have too high a viscosity to process on use.

Illustrative, non-limiting examples of the diorganopolysiloxane (A) are given below. 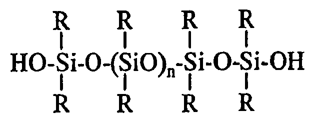 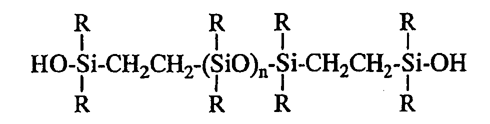 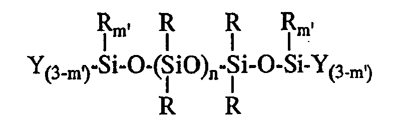 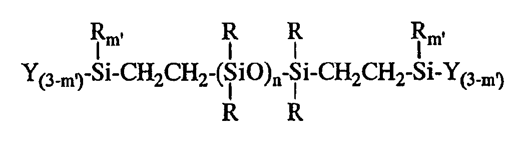 Herein, R, Y and n are as defined above, and m' is 0 or 1.

The diorganopolysiloxanes as component (A) may be used alone or in admixture of two or more.

### [Component (B)]

Component (B) is a silane having at least two hydrolyzable groups in a molecule and/or a partial hydrolytic condensate thereof. It is essential for curing the inventive composition. The silane should have at least two hydrolyzable groups bonded to silicon atoms in a molecule. Typical organosilicon compounds are silanes of the general formula (3) or partial hydrolytic condensates thereof.

R¹ _{b}SiZ_{4-b} (3)

Herein R¹ is each independently a substituted or unsubstituted monovalent hydrocarbon group of 1 to 6 carbon atoms, Z is each independently a hydrolyzable group, and b is an integer of 0 to 2.

Examples of the hydrolyzable group represented by Z are as exemplified for the hydrolyzable group Y, other than hydroxyl group, situated at ends of the molecular chain of diorganopolysiloxane (A). For Z, alkoxy, ketoxime and isopropenoxy groups are preferred.

No particular limits are imposed on the silane or partial hydrolytic condensate as component (B) as long as it has at least two hydrolyzable groups in a molecule. Preferably, at least three hydrolyzable groups are contained in a molecule. A group other than the hydrolyzable group may be bonded to a silicon atom. The molecular structure may be either a silane or siloxane structure. In particular, the siloxane structure may be either straight, branched or cyclic.

The groups, other than the hydrolyzable group, represented by R¹ are substituted or unsubstituted monovalent hydrocarbon groups of 1 to 6 carbon atoms, examples of which include alkyl groups such as methyl, ethyl, propyl, butyl, pentyl and hexyl; cycloalkyl groups such as cyclopentyl and cyclohexyl; alkenyl groups such as vinyl, allyl, butenyl, pentenyl and hexenyl; aryl groups such as phenyl and tolyl; aralkyl groups such as benzyl and 2-phenylethyl; and halogenated alkyl groups such as 3-chloropropyl and 3,3,3-trifluoropropyl. Of these, methyl, ethyl, phenyl and vinyl are preferred.

Illustrative, non-limiting examples of the organosilicon compound (B) include ethyl silicate, propyl silicate, methyltrimethoxysilane, methyltriethoxysilane, vinyltrimethoxysilane, vinyltriethoxysilane, methyltris(methoxyethoxy)silane, vinyltris(methoxyethoxy)silane, methyltripropenoxysilane, methyltriacetoxysilane, vinyltriacetoxysilane, methyltri(methylethylketoxime)silane, vinyltri(methylethylketoxime)silane, phenyltri(methylethylketoxime)silane, propyltri(methylethylketoxime)silane, tetra(methylethylketoxime)silane, 3,3,3-trifluoropropyltri(methylethylketoxime)silane, 3-chloropropyltri(methylethylketoxime)silane, methyltri(dimethylketoxime)silane, methyltri(diethylketoxime)silane, methyltri(methylisopropylketoxime)silane, tri(cyclohexanoxime)silane, and partial hydrolytic condensates thereof. They may be used alone or in combination of two or more.

An appropriate amount of component (B) is usually 0.5 to 30 parts by weight, more preferably 1 to 20 parts by weight per 100 parts by weight of component (A). Less than 0.5 pbw of component (B) may lead to insufficient crosslinking whereas more than 30 pbw of component (B) may result in a cured composition which is too hard and be uneconomical.

### [Component (C)]

Component (C) is a diorganopolysiloxane having methyl and/or ethyl groups bonded to silicon atom. It serves as a bleed oil. A linear molecule is preferable. Preferred are diorganopolysiloxanes of the general formula (4). 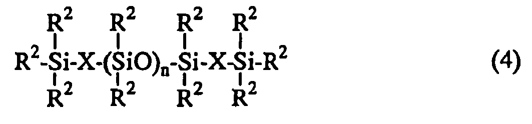 Herein, R² is methyl and/or ethyl, with methyl being preferred. X is an oxygen atom or a divalent hydrocarbon group of 1 to 8 carbon atoms, examples of which are as described above. The subscript n is such a number that the diorganopolysiloxane has a viscosity of 10 to 1,000,000 mm²/s at 25°C.

The diorganopolysiloxane (C) should preferably have a viscosity at 25°C of 10 to 1,000,000 mm²/s, more preferably 20 to 100,000 mm²/s, even more preferably 50 to 50,000 mm²/s, and most preferably 100 to 10,000 mm²/s. If the diorganopolysiloxane has a viscosity of less than 10 mm²/s at 25°C, anti-fouling property may be shortly lost because of too high an oil bleed rate. If the diorganopolysiloxane has a viscosity of more than 1,000,000 mm²/s at 25°C, the composition may have too high a viscosity to process on use and become less anti-fouling.

Recommended viscosity of components (A) and (C) is as specified above. The ratio of the viscosity of component (C) to the viscosity of component (A) is preferably in a range of 0.02 to 0.8, and especially 0.05 to 0.7. If the viscosity ratio (C)/(A) is too high, little of component (C) may oil bleed so that poor anti-fouling property develops even at an immediate stage after immersion. If the viscosity ratio is too low, initial anti-fouling property is good, but may not last long.

Within the viscosity ratio range, a combination of component (A) having a viscosity of 1,000 to 2,000 mm²/s with component (C) having a viscosity of 100 to 1,000 mm²/s and a combination of component (A) having a viscosity of 10,000 to 30,000 mm²/s with component (C) having a viscosity of 1,000 to 5,000 mm²/s are preferred.

Component (C) has an excellent surface activity so that it serves to prevent aquatic organisms from depositing on cured silicone rubber coatings. Blooming on the surface, component (C) functions as a surfactant, thus contributing to the effect of preventing aquatic organisms deposition and the anti-fouling effect.

An appropriate amount of component (C) compounded is 1 to 100 parts by weight per 100 parts by weight of component (A), with 3 to 70 pbw being more preferred, and 5 to 50 pbw being most preferred. Less than 1 pbw of component (C) may fail to exert the addition effect whereas more than 100 pbw of component (C) results in a cured coating which may be opaque or soften beyond the limit.

### [Other components]

In the inventive composition, catalysts may be added for promoting cure. Use may be made of various curing catalysts commonly used in conventional RTV compositions of the condensation curing type. Exemplary catalysts include metal salts of organocarboxylic acids such as lead 2-ethyloctoate, dibutyltin dioctoate, dibutyltin acetate, dibutyltin dilaurate, butyltin 2-ethylhexoate, iron 2-ethylhexoate, cobalt 2-ethylhexoate, manganese 2-ethylhexoate, zinc 2-ethylhexoate, stannous caprylate, tin naphthenate, tin oleate, tin butanoate, titanium naphthenate, zinc naphthenate, cobalt naphthenate, and zinc stearate; organotitanic acid esters such as tetrabutyl titanate, tetra-2-ethylhexyl titanate, triethanolamine titanate and tetra(isopropenyloxy)titanate; organotitanium compounds such as organosiloxytitanium and β-carbonyltitanium; alkoxyaluminum compounds; aminoalkyl-substituted alkoxysilanes such as 3-aminopropyltriethoxysilane and N-(trimethoxysilylpropyl)ethylenediamine; amine compounds and salts thereof such as hexylamine and dodecylamine phosphate; quaternary ammonium salts such as benzyltriethylammonium acetate; alkali metal salts of lower fatty acids such as potassium acetate, sodium acetate and lithium bromate; dialkylhydroxylamines such as dimethylhydroxylamine and diethylhydroxylamine; and guanidine compounds and guanidyl group-containing silanes or siloxanes as represented by the following formulae. 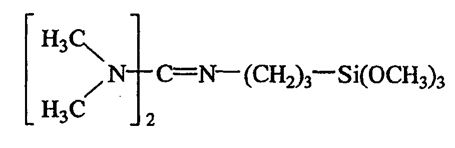 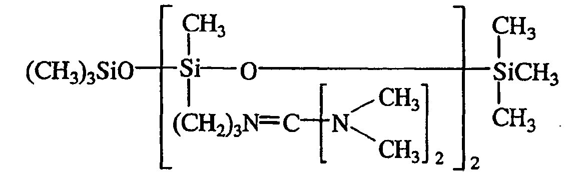 These catalysts may be used alone or in admixture.

When used, the amount of the curing catalyst is not particularly limited. It may be used in a catalytic amount. Typically, the catalyst is preferably used in an amount of 0.01 to 20 parts by weight, more preferably 0.1 to 10 parts by weight per 100 parts by weight of component (A). If the amount of the catalyst, when used, is below the range, the resulting composition may become less curable depending on the type of crosslinking agent. If the amount of the catalyst is above the range, the resulting composition may become less storage stable.

For the reinforcement or extending purpose, fillers may be used in the inventive composition. Suitable fillers include hydrophilic silica such as fumed silica and precipitated silica, hydrophobic silica obtained by surface treatment of the foregoing silica with hexamethyldisilazane or cyclic dimethylsiloxane, quartz, diatomaceous earth, titanium oxide, aluminum oxide, lead oxide, iron oxide, carbon black, bentonite, graphite, calcium carbonate, calcium silicate, silica zeolite, mica, clay, glass beads, glass microballoons, shirasu balloons, glass fibers, polyvinyl chloride beads, polystyrene beads, and acrylic beads. Of these, calcium carbonate, calcium silicate, silica zeolite and hydrophilic silica having a BET specific surface area of at least 10 m²/g, especially at least 50 to 400 m²/g are preferred.

The amount of the filler compounded may be determined in accordance with a particular purpose and the type of filler and is typically 3 to 500 parts by weight, especially 5 to 100 parts by weight per 100 parts by weight of the diorganopolysiloxane as the base polymer.

The inventive composition is preferably prepared by previously heat treating a mixture of the diorganopolysiloxane (A) as the base polymer and the filler at a temperature of at least 100°C, especially 120 to 180°C and compounding components (C) and (B) therein. Component (B) may be compounded at the same time as component (C) or later.

In the inventive composition, optional additives may be compounded in ordinary amounts as long as the objects of the invention are not compromised. Suitable additives include plasticizers, colorants such as pigments, flame retardants, thixotropic agents, bactericides, fungicides, and adhesion improvers such as carbon-functional silanes having amino, epoxy or thiol groups (e.g., γ-glycidoxypropyl-trimethoxysilane and aminopropyltriethoxysilane).

Polar group-containing siloxanes (such as the previously-mentioned alkylene-oxide-based prior art ones) are preferably avoided; alternatively stated, the composition preferably consists or consists essentially of only components discussed above.

The inventive composition is applicable to underwater structures to form a coating on their surface. Suitable underwater structures include ships, harbour facilities, buoys, pipe lines, bridges, submarine stations, submarine oil well excavation units, power plant water conduits, fish culture nets and fixed shore nets. The coating of the inventive composition typically has a thickness of 25 to 750 µm, and especially 50 to 400 µm. The inventive composition may be applied and cured at room or normal temperature.

### EXAMPLE

Examples and Comparative Examples are given below for further illustrating the invention although the invention is not limited thereto. All parts are by weight. The viscosity is a measurement at 25°C.

### Example 1

A composition was prepared by combining 70 parts of α,ω-dihydroxy-diphenyldimethyl-polysiloxane having a viscosity of 1,500 mm²/s (a proportion of phenyl groups relative to entire substituent groups bonded to silicon atoms: 10 mol%) with 15 parts of fumed silica having a specific surface area of 200 m²/g and intimately mixing them under vacuum while heating at 150°C for 2 hours. The mixture was then admixed under vacuum with 12 parts of vinyltris(methylethylketoxime)silane and 1 part of γ-glycidoxypropyltriethoxysilane until uniform. The mixture was further admixed under vacuum with 30 parts of α,ω-trimethylsiloxy-dimethyl-polysiloxane having a viscosity of 100 mm²/s until uniform.

### Example 2

A composition was prepared as in Example 1 except that calcium silicate was used instead of the fumed silica having a specific surface area of 200 m²/g.

### Example 3

A composition was prepared as in Example 1 except that α,ω-dihydroxy-diphenyldimethyl-polysiloxane having a viscosity of 20,000 mm²/s (a proportion of phenyl groups relative to entire substituent groups bonded to silicon atoms: 10 mol%) was used instead of the α,ω-dihydroxy-diphenyldimethyl-polysiloxane having a viscosity of 1,500 mm²/s (a proportion of phenyl groups relative to entire substituent groups bonded to silicon atoms: 10 mol%), and α,ω-trimethylsiloxy-dimethyl-polysiloxane having a viscosity of 1,000 mm²/s was used.

### Example 4

A composition was prepared as in Example 3 except that calcium silicate was used instead of the fumed silica having a specific surface area of 200 m²/g.

### Example 5

A composition was prepared as in Example 1 except that α,ω-dihydroxy-diphenyldimethyl-polysiloxane having a viscosity of 1,500 mm²/s (a proportion of phenyl groups relative to entire substituent groups bonded to silicon atoms: 25 mol%) was used instead of the α,ω-dihydroxy-diphenyldimethyl-polysiloxane having a viscosity of 1,500 mm²/s (a proportion of phenyl groups relative to entire substituent groups bonded to silicon atoms: 10 mol%).

### Comparative Example 1

A composition was prepared as in Example 1 except that α,ω-trimethylsiloxy-dimethyl-polysiloxane having a viscosity of 100 mm²/s was omitted.

### Comparative Example 2

A composition was prepared as in Example 1 except that α,ω-dihydroxy-dimethyl-polysiloxane having a viscosity of 1,500 mm²/s was used instead of the α,ω-dihydroxy-diphenyldimethyl-polysiloxane having a viscosity of 1,500 mm²/s (a proportion of phenyl groups relative to entire substituent groups bonded to silicon atoms: 10 mol%).

### Comparative Example 3

A composition was prepared as in Comparative Example 2 except that calcium silicate was used instead of the fumed silica having a specific surface area of 200 m²/g.

### Comparative Example 4

A composition was prepared as in Comparative Example 2 except that fumed silica surface treated with dimethyldichlorosilane and having a specific surface area of 200 m²/g was used instead of the fumed silica having a specific surface area of 200 m²/g.

### Comparative Example 5

A composition was prepared as in Comparative Example 2 except that α,ω-trimethylsiloxy-diphenyldimethyl-polysiloxane having a viscosity of 100 mm²/s (a proportion of phenyl groups relative to entire substituent groups bonded to silicon atoms: 10 mol%) was used instead of the α,ω-trimethylsiloxy-dimethyl-polysiloxane having a viscosity of 100 mm²/s .

### [Test]

An epoxy base anti-corrosion paint was previously coated onto a plate to a thickness of 200 µm. Each of the compositions of Examples and Comparative Examples was coated thereon and kept at 23°C and 50% RH for 7 days for curing to form a cured film of 300 µm thick. The thus coated plates were test specimens. In a suspension test, the specimens were suspended at a depth of 1.5 m in seawater at a Kanagawa seashore for 12 months. The deposition of shells such as barnacle and seaweed on the specimens was observed and rated among no, some and much deposits (represented by symbols ○, Δ and ×). The results are shown in Tables 1 and 2.

**Table 1**

| | Example | | | | |
|---|---|---|---|---|---|
| | 1 | 2 | 3 | 4 | 5 |
| 3 months | ○ | ○ | ○ | ○ | ○ |
| 6 months | ○ | ○ | ○ | ○ | ○ |
| 12 months | ○ | ○ | ○ | ○ | ○ |

**Table 2**

| | Comparative Example | | | | |
|---|---|---|---|---|---|
| | 1 | 2 | 3 | 4 | 5 |
| 3 months | × | Δ | Δ | Δ | ○ |
| 6 months | × | × | × | × | Δ |
| 12 months | × | × | × | × | Δ |

## Claims

1. An anti-fouling condensation-curing organopolysiloxane composition comprising in admixture,
(A) a base polymer in the form of a diorganopolysiloxane having at least two silicon atombonded hydroxyl or hydrolysable groups in a molecule, in which at least 2 mol% of entire substituent groups bonded to silicon atoms are phenyl groups,
(B) silane having at least two hydrolysable groups per molecule, and/or a partial hydrolytic condensate thereof, and
(C) diorganopolysiloxane having non-reactive, monovalent, substituted or unsubstituted hydrocarbon groups bonded to silicon atom, wherein the hydrocarbon groups are selected from methyl and ethyl.

2. The composition of claim 1, wherein said base polymer (A) is a diorganopolysiloxane having the general formula (1) and/or (2): 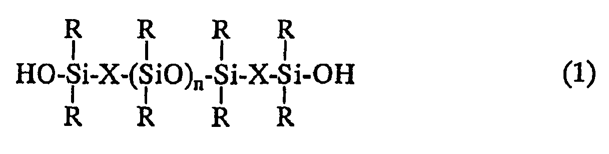 wherein R are substituted or unsubstituted monovalent hydrocarbon groups, at least 2 mol% of R being phenyl groups, X is an oxygen atom or a divalent hydrocarbon group of 1 to 8 carbon atoms, and n is such a number that the diorganopolysiloxane has a viscosity of 100 to 1,000,000 mm²/s at 25°C, 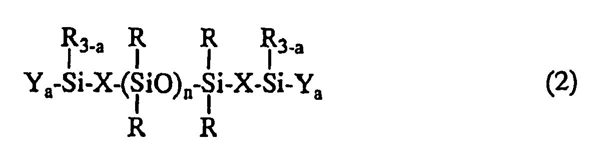 wherein R are substituted or unsubstituted monovalent hydrocarbon groups, at least 2 mol% of R being phenyl groups, X are oxygen atom or divalent hydrocarbon group of 1 to 8 carbon atoms, Y are hydrolysable groups, "a" is equal to 2 or 3, and n is such a number that the diorganopolysiloxane has a viscosity of 100 to 1,000,000 mm²/s at 25°C.

3. A composition according to claim 2 wherein the component (A) is selected from the following diorganopolysiloxanes: 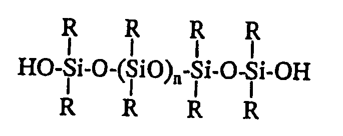 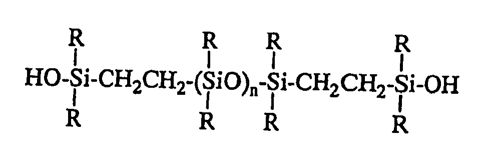 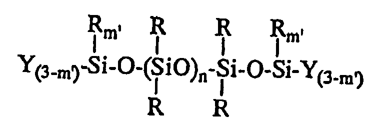 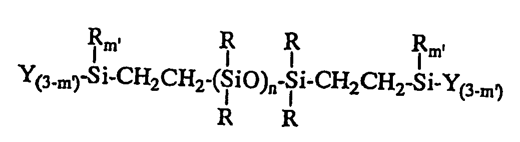 wherein R, Y and n are as defined in claim 2.

4. A composition according to claim 2 or claim 3 wherein phenyl groups account for at least 5 mol% of all R groups.

5. A composition according to any one of claims 2 to 4 wherein phenyl groups account for not more than 50 mol% of all R groups.

6. The composition of any one of the preceding claims, wherein component (B) is a silane of the general formula (3):
R¹_{b}SiZ_{4-b} (3)
wherein R¹ is each independently a substituted or unsubstituted monovalent hydrocarbon group of 1 to 6 carbon atoms, Z is each independently a hydrolysable group, and b is an integer of 0 to 2, and/or a partial hydrolytic condensate thereof.

7. The composition of any one of claims 1 to 6, wherein component (C) is dimethylpolysiloxane.

8. The composition of any one of claims 1 to 7, further comprising hydrophilic silica having a BET specific surface area of at least 10 m²/g as a filler.

9. The composition of any one of claims 1 to 7, further comprising filler selected from among calcium carbonate, calcium silicate and silica zeolite.

10. The composition of any one of claims 1 to 9, wherein the ratio in viscosity of diorganopolysiloxane (C) to diorganopolysiloxane (A) is from 0.02 to 0.8.

11. A composition according to any one of the preceding claims comprising 100 parts by weight of component (A), 0.05 to 30 parts by weight of component (B) and 1 to 100 parts by weight of component (C)

12. An underwater structure coated with the composition of any one of claims 1 to 11.

13. A method comprising applying a composition according to any one of claims 1 to 11 to a structure for underwater use and curing the composition to form an anti-fouling coating.

## Patentansprüche

1. Durch Kondensation härtende Antifouling-Organopolysiloxanzusammensetzung, die folgendes Gemisch enthält:
(A) ein Basispolymer in Form eines Diorganopolysiloxans mit zumindest zwei an ein Siliciumatom gebundenen Hydroxyl- oder hydrolysierbaren Gruppen pro Molekül, wobei zumindest 2 Mol-% aller Substituentengruppen, die an Siliciumatome gebunden sind, Phenylgruppen sind,
(B) Silan mit zumindest zwei hydrolysierbaren Gruppen pro Molekül und/oder ein partielles hydrolytisches Kondensat davon und
(C) Diorganopolysiloxan mit an Siliciumatome gebundenen, nichtreaktiven, einwertigen, substituierten oder unsubstituierten Kohlenwasserstoffgruppen, wobei die Kohlenwasserstoffgruppen aus Methyl und Ethyl ausgewählt sind.

2. Zusammensetzung nach Anspruch 1, worin das Basispolymer (A) ein Diorganopolysiloxan der allgemeinen Formel (1) und/oder (2) ist: 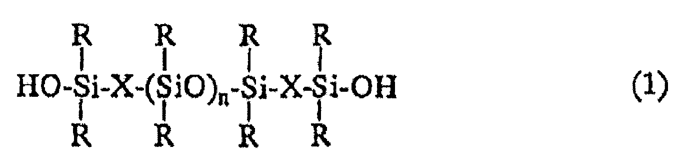 worin die R substituierte oder unsubstituierte, einwertige Kohlenwasserstoffgruppen sind, wobei zumindest 2 Mol-% der R Phenylgruppen sind, die X Sauerstoffatome oder zweiwertige Kohlenwasserstoffgruppen mit 1 bis 8 Kohlenstoffatomen sind und n eine solche Zahl ist, dass das Diorganopolysiloxan eine Viskosität von 100 bis 1.000.000 mm²/s bei 25 °C aufweist, 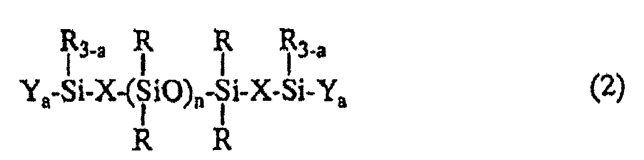 worin die R substituierte oder unsubstituierte, einwertige Kohlenwasserstoffgruppen sind, wobei zumindest 2 Mol-% der R Phenylgruppen sind, die X Sauerstoffatome oder zweiwertige Kohlenwasserstoffgruppen mit 1 bis 8 Kohlenstoffatomen sind, die Y hydrolysierbare Gruppen sind, "a" = 2 oder 3 ist und n eine solche Zahl ist, dass das Diorganopolysiloxan eine Viskosität von 100 bis 1.000.000 mm²/s bei 25 °C aufweist.

3. Zusammensetzung nach Anspruch 2, worin Komponente (A) aus folgenden Diorganopolysiloxanen ausgewählt ist: 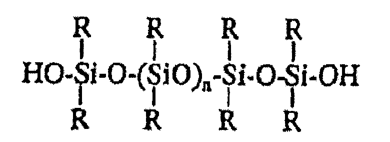 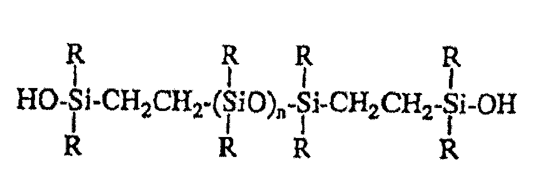 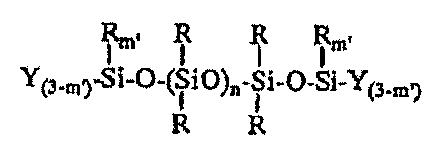 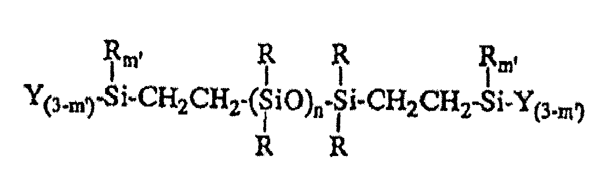 worin R, Y und n wie in Anspruch 2 definiert sind.

4. Zusammensetzung nach Anspruch 2 oder Anspruch 3, worin die Phenylgruppen zumindest 5 Mol-% aller Gruppen R ausmachen.

5. Zusammensetzung nach einem der Ansprüche 2 bis 4, worin die Phenylgruppen nicht mehr als 50 Mol-% aller Gruppen R ausmachen.

6. Zusammensetzung nach einem der vorangegangenen Ansprüche, worin Komponente (B) ein Silan der allgemeinen Formel (3):
R¹_{b}SiZ_{4-b} (3)
worin die R¹ jeweils unabhängig substituierte oder unsubstituierte, einwertige Kohlenwasserstoffgruppen mit 1 bis 6 Kohlenstoffatomen sind, die Z jeweils unabhängig hydrolysierbare Gruppen sind und b eine ganze Zahl von 0 bis 2 ist, und/oder ein partielles hydrolytisches Kondensat davon ist.

7. Zusammensetzung nach einem der Ansprüche 1 bis 6, worin Komponente (C) ein Dimethylpolysiloxan ist.

8. Zusammensetzung nach einem der Ansprüche 1 bis 7, die weiters hydrophiles Silica mit einer spezifischen Oberfläche, gemessen nach dem BET-Verfahren, von zumindest 10 m²/g als Füllstoff umfasst.

9. Zusammensetzung nach einem der Ansprüche 1 bis 7, die weiters einen aus Calciumcarbonat, Calciumsilicat und Silicazeolith ausgewählten Füllstoff umfasst.

10. Zusammensetzung nach einem der Ansprüche 1 bis 9, worin das Viskositätsverhältnis zwischen Diorganopolysiloxan (C) und Diorganopolysiloxan (A) 0,02 bis 0,8 beträgt.

11. Zusammensetzung nach einem der vorangegangenen Ansprüche, die 100 Gewichtsteile von Komponente (A), 0,05 bis 30 Gewichtsteile von Komponente (B) und 1 bis 100 Gewichtsteile von Komponente (C) umfasst.

12. Unterwasserstruktur, die mit einer Zusammensetzung nach einem der Ansprüche 1 bis 11 überzogen ist.

13. Verfahren, welches das Auftragen einer Zusammensetzung nach einem der Ansprüche 1 bis 11 auf eine Struktur zur Verwendung unter Wasser und das Härten der Zusammensetzung zur Ausbildung einer Antifouling-Beschichtung umfasst.

## Revendications

1. Composition antisalissure d'organopolysiloxane durcissant par condensation comprenant, en mélange,
(A) un polymère de base sous la forme d'un diorganopolysiloxane ayant, par molécule, au moins deux groupes hydroxyle ou hydrolysables liés à un atome de silicium, dans lequel au moins 2 % en moles de tous les groupes substituants liés aux atomes de silicium sont des groupes phényle,
(B) un silane ayant au moins deux groupes hydrolysables par molécule, et/ou un condensat hydrolytique partiel de celui-ci, et
(C) un diorganopolysiloxane ayant des groupes hydrocarbonés monovalents substitués ou non substitués, non réactifs, liés à un atome de silicium, dans lequel les groupes hydrocarbonés sont choisis parmi méthyle et éthyle.

2. Composition selon la revendication 1, dans laquelle ledit polymère de base (A) est un diorganopolysiloxane de formule générale (1) et/ou (2) : 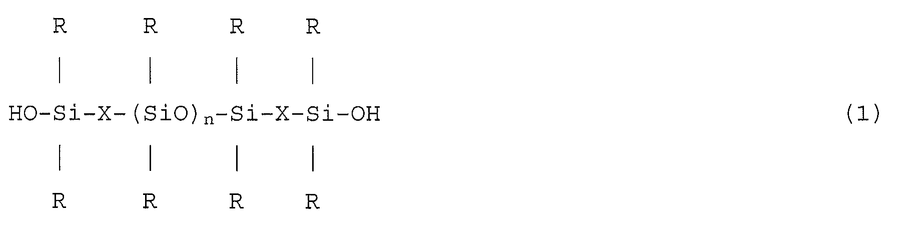 dans laquelle les R sont des groupes hydrocarbonés monovalents substitués ou non substitués, au moins 2 % en moles des R étant des groupes phényle, X est un atome d'oxygène ou un groupe hydrocarboné divalent ayant de 1 à 8 atomes de carbone, et n est un nombre tel que le diorganopolysiloxane ait une viscosité de 100 à 1 000 000 mm²/s à 25°C, 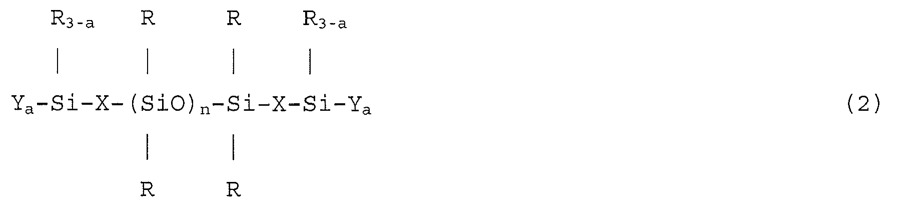 dans laquelle les R sont des groupes hydrocarbonés monovalents substitués ou non substitués, au moins 2 % en moles des R étant des groupes phényle, X est un atome d'oxygène ou un groupe hydrocarboné divalent ayant de 1 à 8 atomes de carbone, les Y sont des groupes hydrolysables, "a" vaut 2 ou 3, et n est un nombre tel que le diorganopolysiloxane ait une viscosité de 100 à 1 000 000 mm²/s à 25°C.

3. Composition selon la revendication 2, dans laquelle le composant (A) est choisi parmi les diorganopolysiloxanes suivantes : 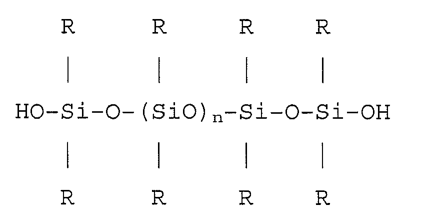 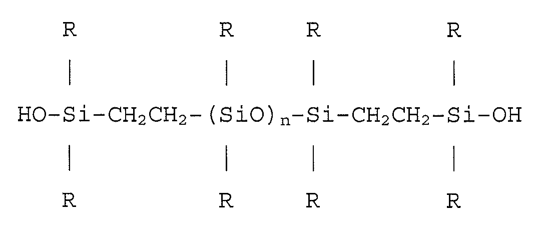 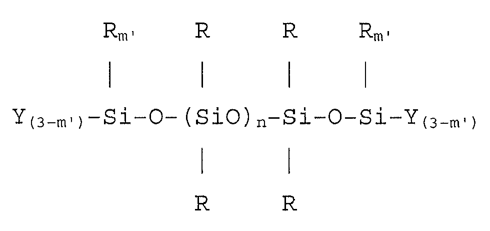 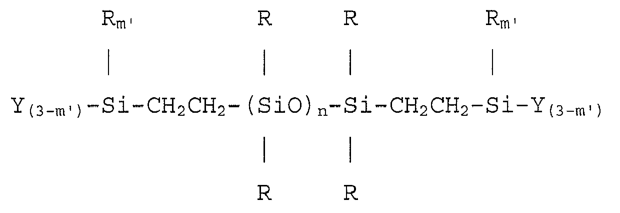 où R, Y et n sont tels que définis dans la revendication 2.

4. Composition selon la revendication 2 ou la revendication 3, dans laquelle les groupes phényle représentent au moins 5 % en moles de tous les groupes R.

5. Composition selon l'une quelconque des revendications 2 à 4, dans laquelle les groupes phényle représentent au plus 50 % en moles de tous les groupes R.

6. Composition selon l'une quelconque des revendications précédentes, dans laquelle le composant (B) est un silane de formule générale (3) :
R¹_{b}SiZ_{4-b} (3)
dans laquelle chaque R¹ est indépendamment un groupe hydrocarboné monovalent substitué ou non substitué ayant de 1 à 6 atomes de carbone, chaque Z est indépendamment un groupe hydrolysable, et b est un entier de 0 à 2, et/ou un condensat hydrolytique partiel de celui-ci.

7. Composition selon l'une quelconque des revendications 1 à 6, dans laquelle le composant (C) est le diméthylpolysiloxane.

8. Composition selon l'une quelconque des revendications 1 à 7, comprenant en outre, en tant que charge, de la silice hydrophile ayant une aire spécifique BET d'au moins 10 m²/g.

9. Composition selon l'une quelconque des revendications 1 à 7, comprenant en outre une charge choisie parmi le carbonate de calcium, le silicate de calcium et la silicezéolite.

10. Composition selon l'une quelconque des revendications 1 à 9, dans laquelle le rapport de viscosité du diorganopolysiloxane (C) au diorganopolysiloxane (A) est de 0,02 à 0,8.

11. Composition selon l'une quelconque des revendications précédentes, comprenant 100 parties en poids de composant (A), 0,05 à 30 parties en poids de composant (B) et 1 à 100 parties en poids de composant (C).

12. Structure sous-marine revêtue de la composition de l'une quelconque des revendications 1 à 11.

13. Procédé comprenant l'application d'une composition selon l'une quelconque des revendications 1 à 11 à une structure pour usage sous-marin et le durcissement de la composition pour former un revêtement antisalissure.
